# EUROPÄISCHE PATENTSCHRIFT

(11) **EP 1 430 953 B1**
(45) Veröffentlichungstag und Bekanntmachung des Hinweises auf die Patenterteilung: **05.11.2008**
(21) Anmeldenummer: 03029533.1
(22) Anmeldetag: 21.12.2003
(51) Int. Cl.: B03B 9/06, B03B 5/52, B03B 11/00, B65B 69/00, B02C 21/00

(54) **Entpackungs- und Stofftrennanlage für verpackte Lebensmittel und Verfahren dafür**
Installation for unpacking- and material separation of packaged food products and method therefore
Installation pour déballer et séparer des matières de produits alimentaires emballés et procédé associé

(30) Priorität: 21.12.2002 DE 10260489
(43) Veröffentlichungstag der Anmeldung: 23.06.2004
(73) Patentinhaber: Schraden Biogas GmbH&Co.KG, 04932 Gröden (DE)
(72) Erfinder: von Jan, Christoph, 04703 Leisnig (DE); Schleinitz, Jürgen, 04932 Gröden (DE); Hornig, Heiko, 01723 Wilsdruff/OT Kesselsdorf (DE)
(74) Vertreter: Weissfloh, Ingo

(56) Entgegenhaltungen:
- EP-A- 0 623 288
- WO-A-02/20187
- WO-A-93/15840
- DE-A1- 3 911 326
- DATABASE WPI Section PQ, Week 198812 Derwent Publications Ltd., London, GB; Class Q31, AN 1988-082643 XP002335111 -& SU 1 330 021 A (KAZA COMBINED FODDE) 15. August 1987 (1987-08-15)

## Beschreibung

Entpackungs- und Stofftrennanlage für verpackte Lebensmittel, die in unterschiedlichsten Verpackungsmaterialien verpackt sind, mittels in einzelnen Anlagenabschnitten angeordneten Schnecken und das dazugehörige Verfahren zur Trennung dieser verpackten Lebensmitteln in Lebensmittel und Verpackung, wobei eine Zerkleinerung der Lebensmittelverpackung und eine Reinigung der Lebensmittelverpackungsreste erfolgt.

Es sind bereits Verfahren und Einrichtungen zur Abtrennung unterschiedlicher verwertbarer Materialfraktionen aus gemischtem Abfall bekannt. In der EP 0 623 288 A1 wird eine Anlage zum Rückgewinnen von terminlich verfallenen Nahrungsmitteln aus ihren Verpackungen beschrieben. Hierbei handelt es sich um verpackte, feste Lebensmittel wie Zucker, Getreideerzeugnisse, Trockenfrüchten usw. Die Anlage besteht aus einem Silo zur Aufnahme der verpackten Lebensmittel. Eine nachgeordnete Schraubenschnecke transportiert die verpackten Lebensmittel zu einer Zerkleinerungsanlage. Das zerkleinerte Material wird durch Gitter gepresst. Eine weitere Schraubenschnecke besitzt am Ende ein Sieb, durch welches die trocknen, zerkleinerten Lebensmittel hindurchfallen und gesammelt werden. Ein nachgeschaltetes Trenngerät trennt noch anhängende Lebensmittelreste von der Verpackung. Die Verpackung kann mittels eines Lüfters über ein Absaugsystem gesammelt werden. Diese Anlage kann jedoch, wie schon oben erwähnt, nur feste und trockene Lebensmittel von ihren Verpackungen trennen.

In der DE 199 23 108 wird ein Verfahren beschrieben, bei dem eine Vorbehandlung des Abfalls in Form einer mechanischen Zerkleinerung erfolgt. Nach der Zerkleinerung wird nach Zugabe von Wasser eine nachfolgende Schwimm-Sink-Trennung durchgeführt. Nach Abtrennung einer ersten Schwerstoff-Fraktion erfolgt das Auflösen wasserlöslicher und/oder suspendierbarer Bestandteile des Abfalls unter mechanischem Energieeintrag in einem Stofflöser (Pulper). Bei erhöhtem Anteil von Papier, Pappe und/oder in Abhängigkeit von den Anhaftungseigenschaften der Nativorganik wird der Betrieb des Stofflösers zusätzlich modifiziert und/oder weitere Vorbehandlungsschritte durchgeführt.

In der DE 101 00 372 wird eine Stofftrenneinrichtung zur Teilaufbereitung von Restmüll direkt aus der Flüssigphase beschrieben. Hierzu ist ein Behälter mit verschiedenen Einbauaggregaten wie Rührwerk zum Mischen, Austragsystem für schwimmende Stoffe , Mammutpumpe zum Absaugen schwebender Stoffe und Förderschleuse für sinkende Stoffe mit mammutpumpenähnlicher Transporttechnik aus dem Flüssigmischer für Sinkstoffe sowie Rücklaufwassereinleitung in den Flüssigmischer vorgesehen. Der Restmüll wird vor dem Eintrag in den Behälter zerkleinert und auf einen TS Anteil von bis zu maximal 20 % gemischt. Gleichzeitig kann im Batchbetrieb eine Behältereinheit mit vorgewärmten Wasser auch als Hydrolysestufe genutzt werden.

Diese beschriebenen Verfahren und damit verbundenen Einrichtungen ermöglichen keine absolute und saubere Trennung der Verpackung/Verpackungsreste von den organischen Bestandteilen der Lebensmittel.

Der Erfindung liegt das Problem zugrunde, eine effektive und gleichzeitige Trennung von Lebensmittel und Verpackung bei verpackten Lebensmitteln, die in unterschiedlichsten Verpackungsmaterialien verpackt sind, und ein dazugehöriges Verfahren zur Trennung dieser verpackten Lebensmittel in Lebensmittel und Verpackung zu schaffen, wobei eine Zerkleinerung der Lebensmittelverpackung und eine Reinigung der Lebensmittelverpackungsreste erfolgt.

Mit der Erfindung wird erreicht, dass gleichzeitig unterschiedlichste, verpackte Lebensmittel mit beliebigen Verpackungsmaterialien verarbeitet werden können. Die Trennung erfolgt sehr effektiv in Biomasse, die vorzugsweise als Grundlage für die Herstellung von Biogas dient, und in gesäuberte und zerkleinerte Verpackungsmittelsreste. Die Anlagenteile sind miteinander vernetzt. Damit entfallen schwere körperliche Arbeiten. Durch den Einsatz eines Steuer-PC werden einzelne Abschnitte der Anlage automatisiert und es werden gleichbleibend gute Trennungsergebnisse erzielt.

Vorteilhafte Ausgestaltungen der Erfindung der Entpackungs- und Stofftrennanlage sind in den Ansprüchen 2 bis 10 und das dazugehörige Verfahren zur Trennung von verpackten Lebensmitteln in Lebensmittel und Verpackung in den Ansprüchen 11 und 12 dargestellt. Bei der Weiterbildung nach Anspruch 2 wird ein zweiter Schredder zwischen der Schrägschnecke und der Paddelschnecke zur weiteren Zerkleinerung fester Bestandteile der Anlage hinzugefügt. Die Weiterbildungen nach Anspruch 3 bis 5 beschreiben besondere Ausführungen des Annahmebehälters. Nach Anspruch 3 ist der Annahmebehälter mit mehreren Annahmeschnecken und einer dazu querliegenden Förderschnecke ausgerüstet. Die Wandung des Annahmebehälters verläuft in Richtung Boden nach Innen und bildet somit eine Schräge. Die Wandung besitzt also eine trichterförmige Gestalt. Durch die Anordnung mehrerer Annahmeschnecken im Boden des Annahmebehälters kann dieser flächenmäßig wesentlich größer gestaltet werden, was eine leichtere Befüllung des Annahmebehälters mit dem zu trennenden Abfall ermöglicht. Die Befüllung kann somit z. B. mit einem Radlader erfolgen. Nach Anspruch 4 können die einzelnen Annahmeschnecken separat gesteuert werden. Die querliegende Förderschnecke ist nach Anspruch 4 in ihrer Drehzahl steuerbar. Mit der Steuerung der einzelnen Schnecken kann Rücksicht auf die unterschiedlichsten Arten von Abfällen genommen werden und der Bediener der Gesamtanlage kann individuell auf das Verfahren Einfluss nehmen. Zwischen dem ersten und dem zweiten Schredder können nach Anspruch 6 mehrere Schrägschnecken angeordnet sein. Mit der steigenden Anzahl der Schrägschnecken erhöht sich der Trennungseffekt zwischen Lebensmittelresten und Verpackungsresten. Mit der Zuführung von Wasser oder Wasserdampf oder Substrat oder deren Kombinationen an den verschiedensten Punkten der Entpackungs- und Stofftrennanlage nach Anspruch 7 wird Einfluss auf die Konsistenz der Biomasse genommen. Nach Anspruch 8 wird die Entpackungs- und Stofftrennanlage mittels eines Steuer-PC gesteuert. Hierdurch sind zumindest teilautomatisierte Abschnitte der Anlage möglich. Nach Anspruch 9 kann die Entpackungs- und Stofftrennanlage mit einer Biogasanlage gekoppelt werden, um somit die anfallende Biomasse gleich wirtschaftlich zu verwerten. Nach Anspruch 10 ist die Paddelschnecke der Anlage für eine Rechts- und Linkslauf geeignet und die Paddel einstell- und nachstellbar. Auch die Anzahl der Paddel auf der welle der Paddelschnecke ist frei wählbar und richtet sich u. a. nach dem zu trennenden Material. Nach Anspruch 12 kann beim Verfahren an unterschiedlichen Stellen Wasser oder Wasserdampf oder Substrat oder deren Kombinationen zugeführt werden.

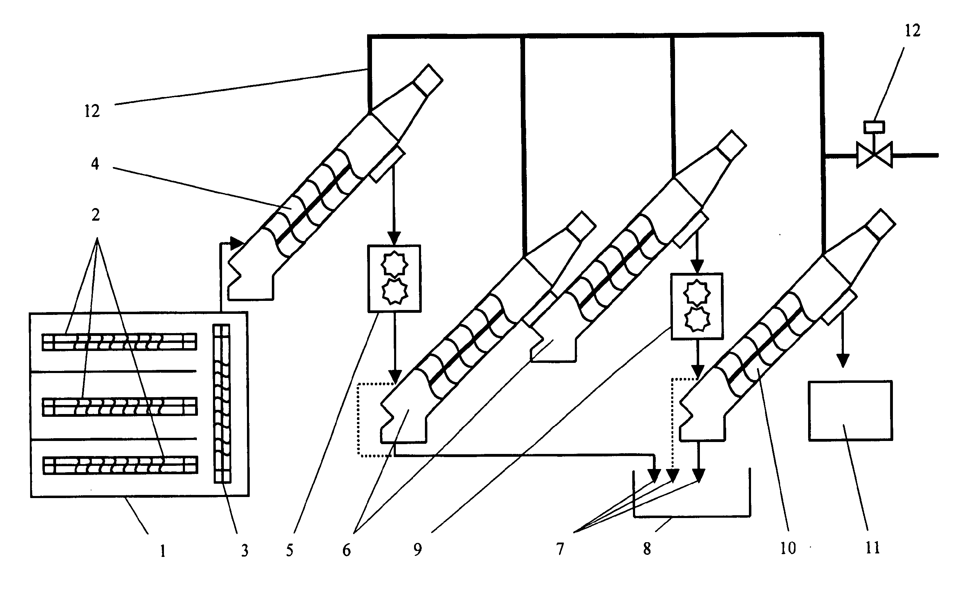

Ein Ausführungsbeispiel der Erfindung hinsichtlich des Aufbaus der Anlage und des Ablaufs des Verfahrens wird anhand der Zeichnung näher erläutert. In der Zeichnung wird die schematische Darstellung der Entpackungs- und Stofftrennanlage gezeigt.

Die Entpackungs- und Stofftrennanlage besteht aus mehreren Anlagenteilen, die miteinander verkettet sind. Am Anfang der Kette befindet sich der Annahmebehälter 1. Seine Wandung verläuft in Richtung Boden nach Innen. Somit ergibt sich eine Art Trichter, der den in den Annahmebehälter abgekippten Abfall in Richtung der am Boden liegenden Annahmeschnecken 2 rutschen lässt. Im Ausführungsbeispiel befinden sich drei Annahmeschnecken 2 parallel nebeneinanderliegend, die alle zu einer querliegenden Förderschnecke 3 hin arbeiten. Durch die Größe des Annahmebehälters 1 ist eine maschinelle Beladung z. B. mit einem Radlader leicht möglich. Die Annahmeschnecken 2 können einzeln zugeschaltet werden, aber auch alle gleichzeitig arbeiten. Die Förderschecke 3 ist in ihrer Drehzahl variabel einstellbar. Bereits durch die Annahmeschnecken 2 und die Förderschnecke 3 wird der Abfall, das heißt die komplette Lebensmittelverpackung, zerquetscht, eingerissen und miteinander vermengt. Die Förderschnecke 3 fördert den Abfall zu einer ersten Schrägschnecke 4. Diese fördert die Abfallmasse über einen ersten Schredder 5, wobei gleichzeitig eine weitere Vermengung der Masse erfolgt. Bereits hier an der ersten Schrägschnecke 4 kann Wasser, Wasserdampf und/oder Substrat über eine entsprechende Zuführung 12 in Abhängigkeit der zu trennenden Lebensmittel von der Verpackung beigegeben werden. Im Schredder 5 erfolgt eine erste Zerkleinerung der festen Bestandteile der Abfallmasse. Nach dem Schredder 5 erfolgt die Übergabe an zwei schräg übereinanderstehenden Schrägschnecken 6, der zweiten und dritten Schrägschnecke 6, wobei am Ausgang des Schredders 5 und/oder an der zweiten Schrägschnecke 6 ein Abfluss 7 zu einem Sammelbecken 8 für die flüssigen Bestandteile der bis hierher bearbeiteten Abfallmasse angeordnet ist. Der Ausgang der dritten Schrägschnecke 6 befindet sich über einem zweiten Schredder 9. Dieser Schredder 9 zerkleinert die festen Bestandteile nochmals auf die Hälfte der Größe. Das Schreddergut wird einer schräggestellten Paddelschnecke 10 übergeben, wobei am Schredder 9 oder am Anfang der Paddelschnecke 10 ein weiterer Abfluss 7 für die flüssigen Bestandteile der Abfallmasse zum Sammelbecken 8 angeordnet ist. Vor der Paddelschnecke 10 werden weiterhin schwere, feste Bestandteile, wie z. B. Glas aussortiert. Die Paddelschnecke ist für einen rechts- und Linkslauf ausgerüstet. Entsprechend der Drehrichtung können die Paddel eingestellt werden. Die einzelnen Paddel sind außerdem nachstellbar. Die Anzahl der Paddel auf der Welle am Wellenumfang und der Abstand auf der Welle zu den einzelnen Anordnungen am Wellenumfang ist frei wählbar. Ebenso ist die Form der Paddel frei wählbar. Der Standwinkel der Paddelschnecke 10 zur Aufstellfläche ist veränderbar. Die Lochung im Siebkorb der Paddelschnecke 10 richtet sich nach dem zu verarbeitenden Material. Am Ende der Paddelschnecke 10 steht ein Sammelcontainer 11 für die festen Verpackungsreste. Im Sammelcontainer 11 werden die festen Restbestandteile der Verpackung aufgefangen.

In Abhängigkeit der zu verarbeitenden Lebensmittelarten und -verpackungen kann der Schredder 9 aus der Gesamtanlage entfernt werden.

Zusammengefasst ist das Verfahren zur Trennung von verpackten Lebensmitteln, die in unterschiedlichsten Verpackungsmaterialien verpackt sind, in Lebensmittel und Verpackung, durch folgende Verfahrensschritte gekennzeichnet. Die verpackten Lebensmittel werden unsortiert in den Annahmebehälter 1 verkippt. Mittels der Annahmeschnecken 2 und der Förderschnecke 3 wird die bereits vermengte und zerquetschte Abfallmasse zur ersten Schrägschnecke 4 transportiert, wobei die Drehzahl der Förderschnecke 3 sich nach der Menge der vorhanden Lebensmittelverpackungen richtet. Am Ausgang der ersten Schrägschnecke 4 werden die vermengten und aufgeplatzten Lebensmittelverpackungen einem ersten Schredder 5 übergeben. Hier erfolgt eine Zerkleinerung aller festen Bestandteile. Anschließend wird diese zerkleinerte Masse einer oder weiteren Schrägschnecken 6 übergeben, wobei vor der Übergabe bereits eine erste Trennung in flüssige Bestandteile und feste Bestandteile erfolgt und die flüssigen Bestandteile dem Sammelbehälter 8 zugeführt werden. Nach dem Durchlauf durch die Schrägschnecken 6, in denen neben dem Transport der Masse ein weiteres Trennen von Verpackung und Lebensmittel erfolgt, wird die Masse in den zweiten Schredder 9 übergeben, in dem die Zerkleinerung der Verpackungen und anderer fester Bestandteile nochmals auf die Hälfte vorgenommen wird. Anschließend erfolgt eine nochmalige Trennung in flüssige Bestandteile mit der Übergabe in den Sammelbehälter 8 und eine Trennung in feste Bestandteile mit der gleichzeitigen Aussortierung schwerer, fester Bestandteile, wie Glas, und die Übergabe der restlichen festen Bestandteile in die Paddelschnecke 10. In der Paddelschnecke 10 werden die restlichen festen Bestandteile mittels Wasser oder Substrat oder beides über die Wasser- und Substratzuführung 12 gewaschen und anschließend in einem Sammelcontainer 11 für den Abtransport aufgefangen. Die im Sammelbecken 8 gesammelte Biomasse wird vorzugsweise einer Biogasanlage oder einer Speicheranlage zugeführt. In Abhängigkeit von den Lebensmittel- und Verpackungsarten können an den verschiedensten Punkten der Trennanlage, z. B. an der ersten Schrägschnecke 4 oder an der oder den Schrägschnecken 6 über die Wasser-, Wasserdampf- oder Substratzuführung 12 Wasser, Wasserdampf oder Substrat oder deren Kombination zugeführt werden.

### Zusammenstellung der Bezugszeichen

1- Annahmebehälter
2 - Annahmeschnecken
3 - Förderschnecke
4- Schrägschnecke
5 - Schredder
6 - Schrägschnecke
7 - Abfluss
8 - Sammelbecken
9 - Schredder
10 - Paddelschnecke
11 - Sammelcontainer
12 - Wasser-, Wasserdampf- oder Substratzuführung

## Patentansprüche

1. Entpackungs- und Stofftrennanlage für verpackte Lebensmittel und für den menschlichen Verzehr ungeeignete Stoffe, die in unterschiedlichsten Verpackungsmaterialien verpackt sind, mittels in einzelnen Anlagenabschnitten angeordneten Schnecken und mindestens einer Zerkleinerungsanlage,
**dadurch gekennzeichnet,**
**dass** im Boden eines Annahmebehälters (1) eine Förderschnecke (3) liegt und diese Förderschnecke (3) mit ihrem Ausgang über einer ersten Schrägschnecke (4) endet und der Ausgang dieser Schrägschnecke (4) mit einem Schredder (5) verbunden ist, der Ausgang dieses Schredders (5) mit mindestens einer weiteren Schrägschnecke (6) verbunden ist und der Schredder (5) und/oder die Schrägschnecke (6) einen Abfluss (7) zu einem Sammelbecken (8) für die flüssigen Bestandteile des Schreddergutes besitzt, der Ausgang der Schrägschnecke (6) mit einer schräg gestellten Paddelschnecke (10) verbunden ist und unter dem Ende der Paddelschnecke (10) ein Sammelcontainer (11) für die festen Verpackungsreste angeordnet ist und die Paddelschnecke (10) einen Abfluss (7) zum Sammelbecken (8) besitzt.

2. Entpackungs- und Stofftrennanlage nach Anspruch 1,
**dadurch gekennzeichnet,**
**dass** zwischen der weiteren Schrägschnecke (6) und der Paddelschnecke (10) ein zweiter Schredder (9) angeordnet ist.

3. Entpackungs- und Stofftrennanlage nach Anspruch 1 und 2,
**dadurch gekennzeichnet,**
**dass** in dem Annahmebehälter (1), der in Richtung Boden nach Innen verlaufende Wände besitzt, mehrere parallel angeordnete Annahmeschnecken (2) vor einer dazu quer liegenden Förderschnecke (3) liegen und die Förderschnecke (3) mit ihrem Ausgang über der ersten Schrägschnecke (4) liegt.

4. Entpackungs- und Stofftrennanlage nach einem der vorhergehenden Ansprüche,
**dadurch gekennzeichnet,**
**dass** die Annahmeschnecken (2) separat steuerbare Antriebe besitzen.

5. Entpackungs- und Stofftrennanlage nach einem der vorhergehenden Ansprüche,
**dadurch gekennzeichnet,**
**dass** die Förderschecke (3) in ihrer Drehzahl steuerbar ist.

6. Entpackungs- und Stofftrennanlage nach einem der vorhergehenden Ansprüche,
**dadurch gekennzeichnet,**
**dass** zwischen dem ersten Schredder (5) und dem zweiten Schredder (9) mehrere Schrägschnecken (6) angeordnet sind.

7. Entpackungs- und Stofftrennanlage nach einem der vorhergehenden Ansprüche,
**dadurch gekennzeichnet,**
**dass** an den Schrägschnecken (4, 6) Wasserdampf- oder Wasserzuführungen (12) oder Substratzuführungen (12)oder deren Kombinationen und an der Paddelschnecke (10) eine Wasserzuführung (12) oder eine Substratzuführung (12) oder beides angeordnet sind.

8. Entpackungs- und Stofftrennanlage nach einem der vorhergehenden Ansprüche,
**dadurch gekennzeichnet,**
**dass** alle elektrischen Maschinenteile der Entpackungs- und Stofftrennanlage mit einem Steuer-PC und einer Notbedienung verbunden sind und diese Maschinenteile auch separat bedienbar sind.

9. Entpackungs- und Stofftrennanlage nach einem der vorhergehenden Ansprüche,
**dadurch gekennzeichnet,**
**dass** das Sammelbecken (8) eine Verbindung zu einer Biogasanlage oder Speicheranlage oder beides besitzt.

10. Entpackungs- und Stofftrennanlage nach einem der vorhergehenden Ansprüche,
**dadurch gekennzeichnet,**
**dass** die Paddelschnecke (10) für einen Rechts- und Linkslauf ausgerüstet ist, die einzelnen Paddel einstell- und nachstellbar sind, die Anzahl der Paddel auf der Welle am Wellenumfang, der Abstand auf der Welle und die einzelnen Paddel in ihrer Form frei wählbar sind, der Winkel der Paddelschnecke (10) zur Aufstellfläche veränderbar ist und die Lochung im Siebkorb der Paddelschnecke (10) dem zu verarbeitenden Material anpassbar ist.

11. Verfahren zur Trennung von verpackten Lebensmitteln, die in unterschiedlichsten Verpackungsmaterialien verpackt sind, in Lebensmittel und Verpackung,
**dadurch gekennzeichnet,**
**dass** die verpackten Lebensmittel unsortiert in einen Annahmebehälter (1) verkippt werden, mittels einer Förderschnecke (3) zu einer ersten Schrägschnecke (4) transportiert werden, wobei die Drehzahl der Förderschnecke (3) sich nach der Menge der vorhanden Lebensmittelverpackungen richtet, am Ausgang der ersten Schrägschnecke (4) die durch die Schnecken aufgeplatzten Lebensmittelverpackungen mit den vermengten Lebensmitteln einem ersten Schredder (5) übergeben werden und hier eine Zerkleinerung aller festen Bestandteile erfolgt, anschließend diese zerkleinerte Masse einer oder mehreren Schrägschnecken (6) übergeben wird, wobei vor der Übergabe bereits eine erste Trennung in flüssige Bestandteile und feste Bestandteile erfolgt und die flüssigen Bestandteile über einen Abfluss (7) einem Sammelbehälter (8) zugeführt werden, nach dem Durchlauf durch die Schrägschnecke (6) oder Schrägschnecken (6), in denen neben dem Transport der Masse ein weiteres Trennen von Verpackung und Lebensmittel erfolgt, wird die Masse einem zweiten Schredder (9) übergeben, in dem die Zerkleinerung der Verpackungen und anderer fester Bestandteile nochmals auf die Hälfte vorgenommen wird, und anschließend erfolgt eine Trennung in flüssige Bestandteile mit der Übergabe in den Sammelbehälter (8) und eine Trennung in feste Bestandteile mit der gleichzeitigen Aussortierung schwerer, fester Bestandteile, wie Glas, und die Übergabe der restlichen festen Bestandteile in eine Paddelschnecke (10), in der die restlichen festen Bestandteile unter Zugabe von Wasser oder Substrat oder beides gewaschen und anschließend in einen Sammelcontainer (11) für den Abtransport aufgefangen werden.

12. Verfahren zur Trennung von verpackten Lebensmitteln nach Anspruch 11,
**dadurch gekennzeichnet,**
**dass** an den Schrägschnecken (4, 6) oder Paddelschnecke (10) oder beiden Wasserdampf oder Wasser oder Substrat oder deren Kombination zugeführt wird.

## Claims

1. Unpacking and material separation system for packed food and for substances unfit for human consumption that are packed in the most diverse packing materials, by means of worms disposed in individual sections of the plant and at least one crushing system,
**characterised in that**
the bottom of a reception container (1) is fitted with a conveying worm (3) and this conveying worm (3) has its exit over a first inclined worm (4) and the exit of this inclined worm (4) is connected to a shredder (5), the exit of this shredder (5) is connected to at least one more inclined worm (6), and the shredder (5) and/or the inclined worm (6) has/have a drain (7) leading to a collecting basin (8) to receive the liquid components of the shredded materials, the exit of the inclined worm (6) is connected to an inclined paddle worm (10) and a collecting container (11) is disposed under the exit of the paddle worm (10) to receive the solid packing residues and the paddle worm (10) has a drain (7) leading to the collecting basin (8).

2. Unpacking and material separation system according to claim 1,
**characterised in that**
a second shredder (9) is disposed between the additional inclined worms (6) and the paddle worm (10).

3. Unpacking and material separation system according to claim 1 and 2,
**characterised in that**
the reception container (1), the walls of which taper towards the bottom, has several reception worms (2) in parallel configuration, disposed in front of a transversely placed conveying worm (3), and the conveying worm (3) has its exit over the first inclined worm (4).

4. Unpacking and material separation system according to any of the preceding claims,
**characterised in that**
the reception worms (2) have separately controllable drives.

5. Unpacking and material separation system according to any of the preceding claims,
**characterised in that**
the conveying worm (3) is speed-controllable.

6. Unpacking and material separation system according to any of the preceding claims,
**characterised in that**
several inclined worms (6) are disposed between the first shredder (5) and the second shredder (9).

7. Unpacking and material separation system according to any of the preceding claims,
**characterised in that**
steam or water feeds (12) or substrate feeds (12) or combinations of these are disposed at the inclined worms (4, 6) and a water feed (12) or a substrate feed (12) or both are disposed at the paddle worm (10).

8. Unpacking and material separation system according to any of the preceding claims,
**characterised in that**
all electrical machine elements of the unpacking and material separation system are connected to a controlling PC and an emergency operation device and these machine elements can also be operated separately.

9. Unpacking and material separation system according to any of the preceding claims,
**characterised in that**
the collecting basin (8) has a connection to a biogas plant or to a storage system or to both.

10. Unpacking and material separation system according to any of the preceding claims,
**characterised in that**
the paddle worm (10) is equipped for forward and reverse action, the individual paddles are adjustable and re-adjustable, the number of paddles on the shaft on the shaft circumference, their distance on the shaft and the shape of the individual paddles are freely selectable, the angle of the paddle worm (10) to the installation area is alterable and the perforation in the sieve basket of the paddle worm (10) is adjustable to the material to be processed.

11. Process for the separation of food packed in the most diverse packing materials into food and packing,
**characterised in that**
the packed food is tipped into a reception container (1) unsorted, is transported by means of a conveying worm (3) to a first inclined worm (4), with the speed of the conveying worm (3) following the quantity of food packages present, the food packages burst open by the worms and mixed with the food are transferred, at the exit of the first inclined worm (4), to a first shredder (5) where all solid components are shredded, then this shredded mass is transferred to one or more inclined worms (6), whereby, prior to the transfer, a first separation into liquid components and solid components takes place and the liquid components are fed into a collection basin (8) through a drain (7), the mass, after passing the inclined worm (6) or inclined worms (6) where, additionally to the transport of the mass, packing and food are further separated, is transferred to a second shredder (9) where the packing and other solid components are shredded once again to half of their previous size, and then there is a separation into liquid components with their transfer to the collecting basin (8) and a separation into solid components with the simultaneous sorting out of heavy solid components such as glass, and the transfer of the residual fine solid components to a paddle worm (10) in which the residual solid components are washed by adding water or substrate or both and then collected in a collecting container (11) for removal.

12. Process for the separation of packed food according to claim 11,
**characterised in that**
steam or water or substrate or a combination of these are added at the inclined worms (4, 6) or the paddle worm (10) or both.

## Revendications

1. Installation de déballage et de séparation de matières pour des aliments emballés et pour des matières ne convenant pas à la consommation humaine, au moyen de vis sans fin disposées dans les différentes sections de l'installation et au moins d'une unité de broyage, **caractérisée par le fait que** le fond d'une trémie de réception (1) est équipé d'une vis transporteuse (3), que la sortie de cette vis transporteuse (3) est située au-dessus d'une première vis sans fin oblique (4) et que la sortie de cette vis sans fin oblique (4) est reliée à un premier broyeur (5), que la sortie du broyeur (5) est reliée à au moins une autre vis sans fin oblique (6) et que le broyeur (5) ou la vis sans fin oblique (6) possède un écoulement (7) vers un bassin collecteur (8) pour les constituants liquides de matières broyées, la sortie de la vis sans fin oblique (6) est reliée à un deuxième broyeur (9), le broyeur (9) est relié à un vis sans fin oblique à palettes (10) et qu'un conteneur collecteur (11) pour les résidus solides des emballages est placé sous l'extrémité de la vis sans fin à palettes (10) et que le broyeur (9) ou la vis sans fin à palettes (10) ou les deux disposent d'un écoulement (7) vers le bassin collecteur (8).

2. Installation de déballage et de séparation des matières selon la revendication 1, **caractérisée par le fait qu'**un deuxième broyeur (9) est disposé entre la deuxième vis sans fin oblique (6) et la vis sans fin à palettes (10).

3. Installation de déballage et de séparation de matières selon les revendications 1 et 2, **caractérisée par le fait que** la trémie de réception (1) qui possède des paroi inclinées vers l'intérieur en direction du fond, que plusieurs vis sans fin d'alimentation (2) parallèles sont disposées en amont d'une vis transporteuse (3) transversale et que la sortie de la vis transporteuse (3) est placée au-dessus de la première vis sans fin oblique (4).

4. Installation de déballage et de séparation de matières selon l'une de revendications précitées, **caractérisée par le fait que** les vis sans fin d'alimentation (2) possèdent des entraînements à commande individuelle.

5. Installation de déballage et de séparation de matières selon l'une de revendications précitées, **caractérisée par le fait que** les vis sans fin d'alimentation (3) possèdent des entraînements à commande individuelle.

6. Installation de déballage et de séparation de matières selon l'une des revendications précitées, **caractérisée par le fait que** plusieurs vis sans fin obliques (6) sont disposées entre le premier broyeur (5) et le deuxième broyeur (9).

7. Installation de déballage et de séparation de matières selon l'une des revendications précitées, **caractérisées par le fait que** les vis sans fin obliques (4, 6) sont équipées d'alimentations en vapeur d'eau et/ou en eau (12) et/ou d'alimentations en substrat (12) ou d'une combinaison des deux et que la vis sans fin à palettes (10) est équipée d'une alimentation en eau (12) ou d'une alimentation en substrat (12) ou des deux.

8. Installation de déballage et de séparation de matières selon l'une des revendications précitées, **caractérisée par le fait que** toutes les parties électriques de l'installation de déballage et de séparation de matières sont reliées à un PC de commande et à une commande de secours et que ces pièces de machine peuvent être commandées séparément.

9. Installation de déballage et de séparation de matières selon l'une des revendications précitées, **caractérisée par le fait que** le bassin collecteur (8) est raccordé à une installation biogaz ou d'une installation d'accumulation ou aux deux.

10. Installation de déballage et de séparation de matières selon l'une des revendications précitées, **caractérisée par le fait que** la vis sans fin à palettes (10) est équipée pour la marche à droite et la marche à gauche, que les différentes palettes sont réglables et ajustables, que le nombre de palettes de l'arbre sur la circonférence de l'arbre, la distance sur l'arbre et la forme des palettes peuvent être choisis librement, que l'angle de la vis sans fin à palettes (10) par rapport à la surface de montage peut être modifié et que la perforation dans le tamis de la vis sans fin à palettes (10) peut être adaptée à la matière à traiter.

11. Procédé pour la séparation d'aliments emballés qui sont emballés dans des matériaux d'emballage les plus divers, en aliments et en emballage, **caractérisé par le fait que** les aliments emballés sont versés, non triés, dans une trémie de réception (1), transportés à l'aide d'une vis de transport (3) vers une première vis sans fin oblique (4), où la vitesse de la vis de transport (3) varie en fonction de la quantité d'emballages d'aliments présents, qu'à la sortie de la première vis sans fin oblique (4) les emballages d'aliments éclatés par les vis sans fin avec les aliments mélangés sont transmis au premier broyeur (5) où intervient le broyage de tous les constituants solides, qu'ensuite cette masse broyée est envoyées sur une ou plusieurs vis sans fin obliques (6) avec, avant la transmission, a lieu une première séparation en constituants liquides et constituants solides et où les constituants liquides sont envoyés par l'intermédiaire d'un écoulement (7) dans un bassin collecteur (8). Après le passage dans la vis sans fin oblique (6) ou les vis sans fin obliques (6) où intervient outre le transport de la masse une nouvelle séparation de l'emballage et des aliments, la masse est envoyée dans un deuxième broyeur (9) où la moitié des emballages et autres constituants solides est broyée, et ensuite intervient une séparation en constituants liquides avec transport dans le bassin collecteur (8) et suivie d'une séparation en constituants solides avec tri simultané de constituants solides lourds, tels que verre, et puis le transport du restant des constituants solides dans une vis sans fin à palettes (10) où le reste des constituants solides est lavé avec ajout d'eau ou de substrat ou des deux et ensuite récupéré dans un conteneur collecteur (11) pour l'évacuation.

12. Procédé pour la séparation d'aliments emballés selon revendication 11, **caractérisé par le fait que** les vis sans fin obliques (4, 6) ou vis sans fin à palettes (10) ou les deux sont alimentées en vapeur d'eau ou en eau ou en substrat.
